# EUROPEAN PATENT SPECIFICATION

(11) **EP 3 050 428 B1**
(45) Date of publication and mention of the grant of the patent: **24.07.2019**
(21) Application number: 14849865.2
(22) Date of filing: 10.09.2014
(51) Int. Cl.: A01G 25/02, A01C 23/04

(54) **DRIP IRRIGATION TUBE**
TROPFENBEWÄSSERUNGSLEITUNG
TUBE D'IRRIGATION AU GOUTTE-À-GOUTTE

(30) Priority: 24.09.2013 JP 2013196945
(43) Date of publication of application: 03.08.2016
(73) Proprietor: Enplas Corporation, Kawaguchi-shi, Saitama 332-0034 (JP)
(72) Inventor: KIDACHI, Masahiro, Kawaguchi-shi Saitama 332-0034 (JP)
(74) Representative: Epping - Hermann - Fischer
(86) International application number: PCT/JP2014/073876
(87) International publication number: WO 2015/045861

(56) References cited:
- EP-A2- 0 730 822
- WO-A1-99/33571
- WO-A1-2014/081599
- GB-A- 698 942
- JP-A- H04 211 311
- JP-A- 2006 050 948
- JP-A- 2012 005 369
- US-A- 5 878 963
- US-B1- 7 578 486

## Description

### Technical Field

The present invention relates to a drip irrigation tube.

### Background Art

Drip irrigation methods are known as one of plant cultivating methods. In the drip irrigation methods, a drip irrigation tube is disposed on the soil, and irrigation liquid such as water and liquid fertilizer is slowly supplied from the drip irrigation tube into the soil on which plants are planted, for example. The drip irrigation methods can minimize the liquid consumption, and therefore have increasingly attracted attention in recent years.

Such a drip irrigation tube typically has a tube and a dripper. Typically, the dripper supplies the irrigation liquid in the tube to the soil at a set rate at which the irrigation liquid drips into the soil. Known examples of the dripper include a dripper which is disposed in such a manner as to stick into a tube from outside, and a dripper which is bonded on an inner wall of a tube.

The latter dripper has, for example, a channel including a pressure reduction channel that allows liquid, which has flowed from the inside of the tube to the dripper, to flow toward an ejection port opening at a tube wall of the tube while depressurizing the liquid; and a diaphragm that changes the volume of a part, of the channel, where the depressurized irrigation liquid flows in accordance with the liquid pressure in a tube space. The dripper is composed of three members, i.e., a base part bonded to the inner wall of the tube, a coating part disposed on the base part, and a diaphragm disposed between the two members. The base part includes a chimney part having I-shaped cross-sectional shape, for example. The chimney part pushes the wall of the tube from inside. Cutting both the chimney part and the part pushed by the chimney part allows the ejection port to be formed. Further, the chimney part secures a space which serves as a channel of liquid at the ejection port (see, e.g., PTL 1).

The drippers can suppress variations in the ejection amount of the irrigation liquid regardless of changes in liquid pressure in the tube space. Further, liquid ejected from the ejection port is more likely to drip from the tip of the chimney part. Accordingly, the liquid is more likely to be supplied to the soil immediately below the ejection port. Therefore, the dripper is advantageous from the perspective of growing multiple plants uniformly. In addition, a drip irrigation tube which includes a tube having an ejection port and guide parts is known. The ejection port is, for example, a hole extending through a tubular wall. For each ejection port is provided the guide parts located circumferentially at two positions on an outer circumferential surface of the tube. The guide portion is, for example, a plate -like part extending outward for guiding liquid ejected from the ejection port in a circumferential direction of the tube (see, e.g., PTLs 2 and 3).

### Citation List

### Patent Literature

PTL 1
   US Patent No. 8,302,887
PTL 2
   US Patent No. 7,578,486
PTL 3
   US Patent No. 5,878,963

### Summary of Invention

### Technical Problem

The drip irrigation tube is sometimes disposed such that the ejection port faces upward, in order to prevent the soil from attaching to the periphery of an opening of the ejection port to clog the ejection port. When the drip irrigation tube is disposed such that the ejection port faces upward, liquid ejected from the ejection port sometimes runs along the outer wall of the tube in the longitudinal direction of the tube and drips at a position distant from the ejection port to be absorbed into the soil. Therefore, it is desired to supply liquid ejected from the drip irrigation tube to the soil at an intended rate from an intended position at which the ejection port is formed, regardless of the orientation of the ejection port, of the drip irrigation tube, on the soil.

An object of the present invention is to provide a drip irrigation tube capable of supplying liquid in the tube to the soil from the ejection port or a position in the vicinity of the ejection port in the longitudinal direction of the tube.

### Solution to Problem

The present invention is achieved with a drip irrigation tube according to the independent claim 1.

### Advantageous Effects of Invention

Since the drip irrigation tube according to the present invention has the guide part, the flow of liquid running along the outer wall of the tube in the longitudinal direction of the tube is retained at the guide part. Thus, the liquid is likely to be accumulated at the guide part, and the accumulated liquid is likely to be guided downward along the guide part to drip from the guide part. Therefore, according to the drip irrigation tube of the present invention, it is possible to supply liquid in the tube to the soil from a position at least in the vicinity of an ejection port in the longitudinal direction of the tube, even when the liquid ejected from the ejection port runs in the longitudinal direction of the tube.

### Brief Description of Drawings

FIG. 1A is a schematic plan view of a drip irrigation tube according to Embodiment 1 shown as an example useful for the understanding of the present invention, and FIG. 1B is a cross-sectional view of the drip irrigation tube cut along line A-A in FIG. 1A;
FIG. 2 illustrates an enlarged cross-section of a dripper in the drip irrigation tube according to Embodiment 1;
FIG. 3A illustrates an upper surface, a front surface, and a side surface of the dripper according to Embodiment 1, and FIG. 3B illustrates a bottom surface, the front surface and the side surface of the dripper of Embodiment 1;
FIG. 4A to FIG. 4D are a plan view, a front view, a bottom view and a side view of the dripper according to Embodiment 1, respectively;
FIG. 5A to FIG. 5D are a plan view, a front view, a bottom view and a side view of a dripper body according to Embodiment 1, respectively;
FIG. 6A to FIG. 6D are a plan view, a front view, a bottom view and a side view of a movable part according to Embodiment 1, respectively;
FIG. 7A is a side view schematically illustrating a state before the movement of the movable part of the dripper according to Embodiment 1, and FIG. 7B is a side view schematically illustrating a state after the movement of the movable part of the dripper;
FIG. 8A is a cross-sectional view schematically illustrating the dripper according to Embodiment 1 cut along line A-A in FIG. 4C before the movement of the movable part, and FIG. 8B is a cross-sectional view schematically illustrating the dripper cut along line A-A in FIG. 4C after the movement of the movable part;
FIG. 9A is a cross-sectional view of the drip irrigation tube according to Embodiment 1 cut along line A-A in FIG. 1A, schematically illustrating liquid being ejected from the drip irrigation tube disposed such that ejection ports face downward, and FIG. 9B is a front view schematically illustrating liquid being ejected from the drip irrigation tube according to Embodiment 1 disposed such that ejection ports face upward;
FIG. 10A is a schematic front view of a drip irrigation tube according to Embodiment 2 disposed such that ejection ports face upward, and FIG. 10B schematically illustrates liquid being ejected from the drip irrigation tube;
FIG. 11A is a schematic front view of a drip irrigation tube according to Embodiment 3 of the present invention, and FIG. 11B is a schematic front view of a drip irrigation tube according to Embodiment 4 of the present invention;
FIG. 12A illustrates an upper surface, a front surface, and a side surface of a dripper according to Embodiment 5 of the present invention, and FIG. 12B illustrates a bottom surface, the front surface and the side surface of the dripper;
FIG. 13A to FIG. 13D are a plan view, a front view, a bottom view and a side view of the dripper according to Embodiment 5, respectively;
FIG. 14A is a cross-sectional view schematically illustrating the dripper according to Embodiment 5 cut along line A-A in FIG. 13C before the movement of the movable part, and FIG. 14B is a cross-sectional view schematically illustrating the dripper cut along line A-A in FIG. 13C after the movement of the movable part; and
FIG. 15A is a schematic front view of a drip irrigation tube according to Embodiment 6 or 7 disposed such that ejection ports face upward, FIG. 15B schematically illustrates liquid being ejected from the drip irrigation tube according to Embodiment 6, and FIG. 15C schematically illustrates liquid being ejected from the drip irrigation tube according to Embodiment 7.

### Description of Embodiments

Hereinafter, embodiments of the present invention will be described in detail with reference to the accompanying drawings.

### [Embodiment 1]

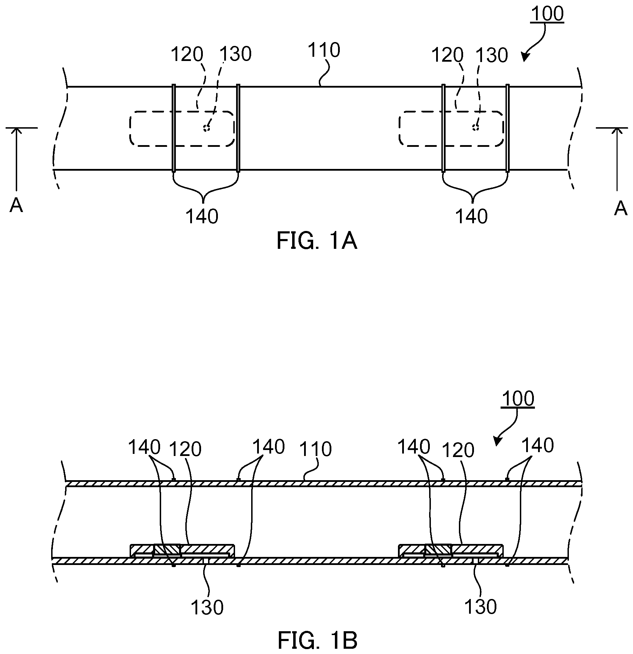

FIG. 1A is a schematic plan view of a drip irrigation tube according to Embodiment 1 shown as an example useful for the understanding of the present invention, and FIG. 1B is a cross-sectional view of the drip irrigation tube cut along line A-A in FIG. 1A. Drip irrigation tube 100 is composed of tube 110, drippers 120, ejection ports 130, and guide parts 140.

Tube 110 is made of, for example, polyethylene, and dripper 120 is made of, for example, polypropylene.

Drippers 120 are disposed at a predetermined interval (e.g., 200 to 500 mm) in the axis direction of tube 110. Each dripper 120 is fixed on the inner wall of tube 110 by welding. Dripper 120 is disposed at a position where dripper 120 covers ejection port 130 of tube 110. Specifically, dripper 120 is disposed such that an ejection part thereof described below covers ejection port 130.

Ejection port 130 is a through hole extending through the tube wall of tube 110. The hole diameter of ejection port 130 is, for example, 1.5 mm. Ejection port 130 is typically formed after dripper 120 is welded.

Guide part 140 is a different diameter part having an outer diameter different from the outer diameter of the tube. Guide part 140 is disposed at two locations, for single ejection port 130 (a part at which ejection port 130 is to be formed if ejection port 130 has not been formed yet), such that ejection port 130 is interposed between guide parts 140 in the longitudinal direction of tube 110. That is, each ejection port 130 is disposed between two guide parts 140 in the longitudinal direction.

The distance from ejection port 130 to guide part 140 is preferably as short as possible, from the perspective of dripping liquid ejected from ejection port 130 from a position near ejection port 130 to the soil. From such a perspective, the distance from ejection port 130 to guide part 140 is preferably 10 to 100 mm, and more preferably 10 to 50 mm. The distance from ejection port 130 to guide part 140 may be constant or different. Note that the distance from ejection port 130 to guide part 140 is the shortest distance from the center of ejection port 130 to guide part 140 in the longitudinal direction.

Each guide part 140 is provided circumferentially in the circumferential direction of tube 110 on the outer circumferential surface of tube 110. Guide part 140 constitutes a part having an outer diameter larger than the outer diameter of tube 110 on the outer circumferential surface of tube 110. Guide part 140 is formed, for example, by winding an adhesive tape.

Guide part 140 has an outer diameter larger than the outer diameter of tube 110. Guide part 140 forms a step difference on the outer circumferential surface of tube 110. The half value of the difference obtained by subtracting the outer diameter of tube 110 from the outer diameter of guide part 140 (height difference equivalent to one step difference; hereinafter, also referred to as "height") is, for example, 2 mm. The height of guide part 140 can be appropriately determined within such a range as to bring a function of guiding liquid described below downward along the circumferential direction of tube 110 (hereinafter, also referred to as "drip-facilitating function"). The height of guide part 140 is preferably 0.5 to 5 mm, and more preferably 0.5 to 3 mm, from the above-mentioned perspective. The height of guide part 140 may be constant, different, an average value, or the minimum value.

The width of guide part 140 (length of guide part 140 in the longitudinal direction of tube 110) is, for example, 3 mm. The width of guide part 140 can be appropriately determined within a range smaller than the distance between adjacent ejection ports 130 in the longitudinal direction of tube 110. The width of guide part 140 is preferably 1 to 20 mm, and more preferably 2 to 10 mm, from the above-mentioned perspective. The width of guide part 140 may be constant, different, an average value, or the minimum value.

Liquid in tube 110 is ejected from ejection port 130 by dripper 120 at a set rate. First, the configuration and function of dripper 120 will be described below.

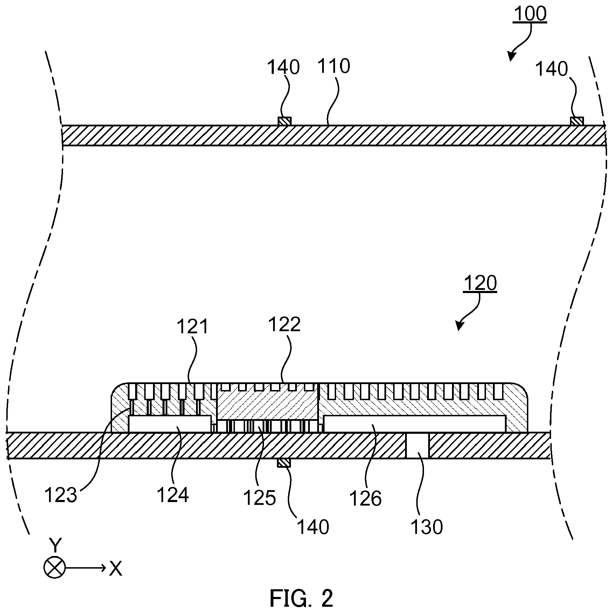

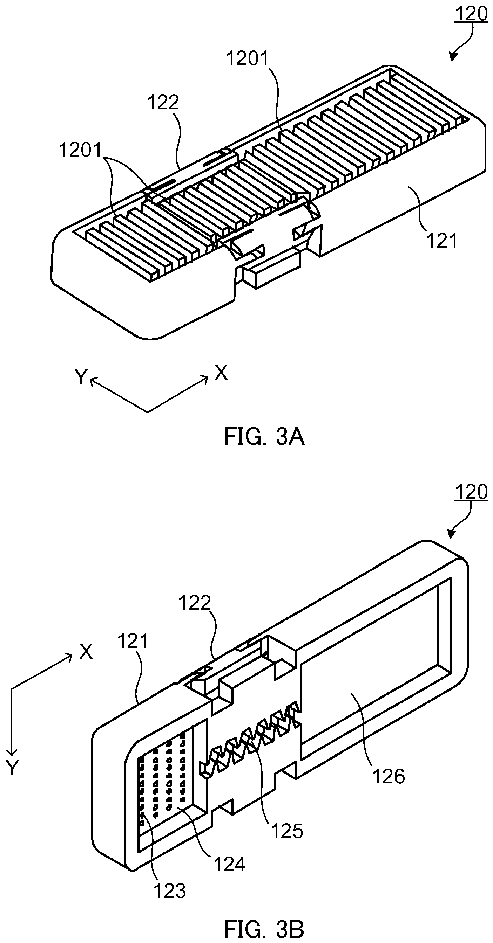

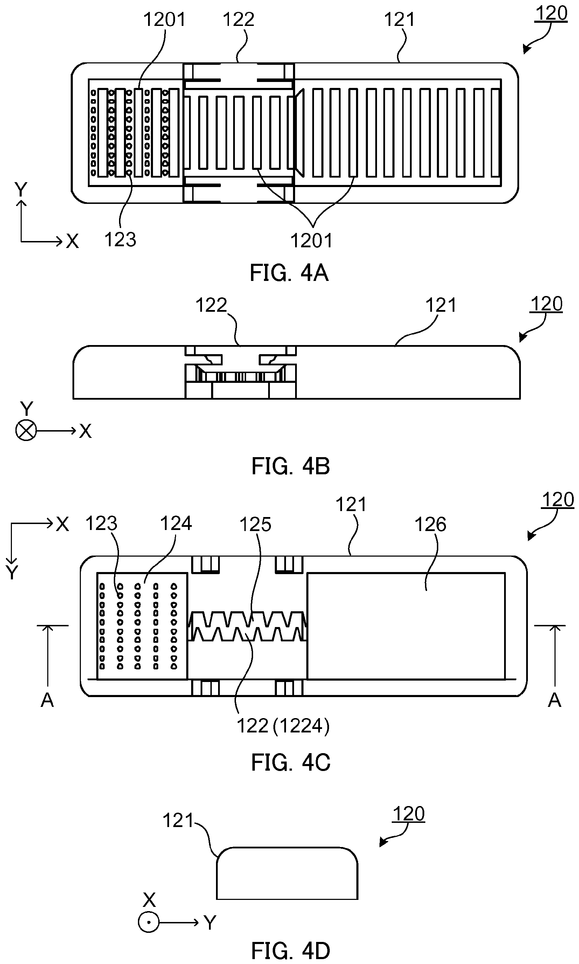

FIG. 2 illustrates an enlarged cross-section of the dripper in the drip irrigation tube according to the present embodiment. FIG. 3A illustrates an upper surface, a front surface, and a side surface of the dripper according to the present embodiment, and FIG. 3B illustrates a bottom surface, the front surface and the side surface of the dripper according to the present embodiment. FIG. 4A to FIG. 4D are a plan view, a front view, a bottom view and a side view of the dripper according to the present embodiment, respectively.

Dripper 120 has dripper body 121 and movable part 122 engaged with dripper body 121, as shown in FIG. 2. Dripper 120 forms a liquid channel which is independent from the inner space of tube 110 and allows the inner space of tube 110 to communicate with ejection port 130. The channel includes inflow part 124, pressure reduction channel 125 and ejection part 126. Inflow part 124 communicates with the inner space of tube 110 through inflow ports 123. Pressure reduction channel 125 is formed by fitting a projection of movable part 122 described below with an open part of dripper body 120 described below.

A depression (also referred to as "top surface side recess") is formed on the upper surface (top surface) of dripper 120, and a plurality of protrusions 1201 are disposed in the top surface side recess, as shown in FIGS. 3A and 4A. Protrusions 1201 extend in transverse direction Y of dripper 120 and are arranged in parallel in longitudinal direction X of dripper 120. Both ends of protrusion 1201 are apart from side walls of the top surface side recess in Y direction. The height of protrusion 1201 is, for example, 0.5 mm, and the interval between protrusions 1201 (the distance between the axes of protrusions 1201) is, for example, 0.5 mm.

A plurality of inflow ports 123 are disposed on the bottom of the top surface side recess at one end part in X direction, as shown in FIGS. 3B and 4C. Inflow ports 123 are disposed in lines along protrusions 1201 (in Y direction). Inflow port 123 is a hole extending through the bottom of the top surface side recess and allows the upper side of dripper 120 to communicate with inflow part 124. The hole diameter of inflow port 123 is, for example, 0.3 mm.

As shown in FIGS. 3B and 4C, each of inflow part 124 and ejection part 126 is a rectangular depression (also referred to as "bottom surface side recesses") which is recessed from the bottom surface of dripper body 121 and is disposed at each end part of dripper body 121. The height of inflow part 124 (the depth of the bottom surface side recess at one end side in X direction) is, for example, 1.0 mm, and the height of ejection part 126 (the depth of the bottom surface side recess at the other end side in X direction) is, for example, 1.0 mm.

Pressure reduction channel 125 allows inflow part 124 to communicate with ejection part 126, as shown in FIG. 4C. The shape of pressure reduction channel 125 in plan view is a zigzag shape. The zigzag shape is formed by alternately disposing protrusions each having a substantially triangular shape and protruding from side walls of pressure reduction channel 125 in the longitudinal direction of pressure reduction channel 125. The protrusion is formed such that the tip end of the protrusion does not go beyond the central axis of pressure reduction channel 125 in plan view. Both end parts of pressure reduction channel 125 are formed only with dripper body 121, and the other part of pressure reduction channel 125 is formed by fitting a projection of movable part 122 together with an open part formed in dripper body 121 (FIGS. 4B and 4C).

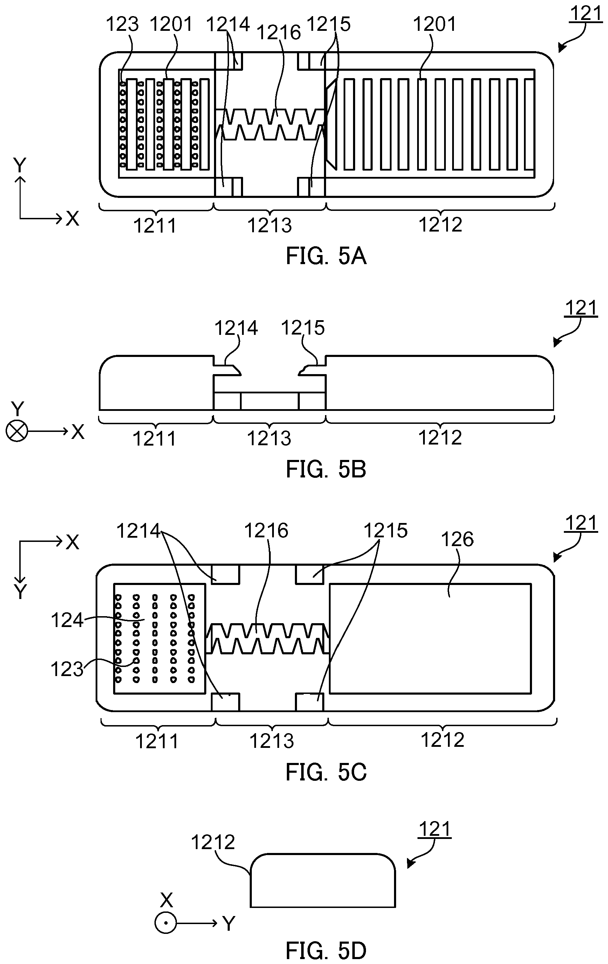

FIG. 5A to FIG. 5D are a plan view, a front view, a bottom view and a side view of the dripper body according to the present embodiment, respectively.

Dripper body 121 is made of, for example, polypropylene. Dripper body 121 has first end part 1211, second end part 1212 and connecting part 1213 as shown in FIGS. 5A to 5C. First end part 1211 includes the top surface side recess, protrusions 1201, inflow ports 123 and inflow part 124. Second end part 1212 includes the top surface side recess, protrusions 1201 and ejection part 126.

Further, first end part 1211 and second end part 1212 have elastic supporters 1214 and 1215, respectively, at both end parts of first end part 1211 and second end part 1212. Both elastic supporters 1214 and 1215 are disposed at relatively high positions on upper surface (top surface) side relative to the center of dripper body 121 in the height (thickness) direction. Elastic supporter 1214 is a plate-shaped elastic member protruding from an end surface of first end part 1211 on second end part 1212 side. Elastic supporter 1215 is a plate-shaped elastic member protruding from an end surface of second end part 1212 on first end part 1211 side. The upper surface (top surface) of each of elastic supporters 1214 and 1215 is parallel with the top surface of dripper body 121. An inclining surface inclined from top surface side to the bottom surface side is formed at the tip of the upper surface (top surface) of each of elastic supporters 1214 and 1215.

Connecting part 1213 connects first end part 1211 with second end part 1212. The shape of connecting part 1213 in plan view is a substantially cross shape formed by cutting out a rectangle having a shape substantially the same as the shape of elastic supporters 1214 and 1215 in plan view from every corner of a rectangle, as shown in FIGS. 5A and 5C. Connecting part 1213 has a bottom surface on the same plane as the bottom surfaces of first end part 1211 and second end part 1212, as shown in FIG. 5B. The thickness (height) of connecting part 1213 is less than half the height of dripper body 121, and slightly larger than the height of pressure reduction channel 125. The height of connecting part 1213 is, for example, about 1.3 times as large as the height of pressure reduction channel 125.

Connecting part 1213 includes open part 1216 which opens to the inner space of tube 110 except for both end parts of pressure reduction channel 125. The shape of open part 1216 in plan view is the same as the zigzag shape of pressure reduction channel 125, as shown in FIGS. 5A and 5C. Open part 1216 is configured of a cut extending through connecting part 1213 in the thickness direction of connecting part 1213.

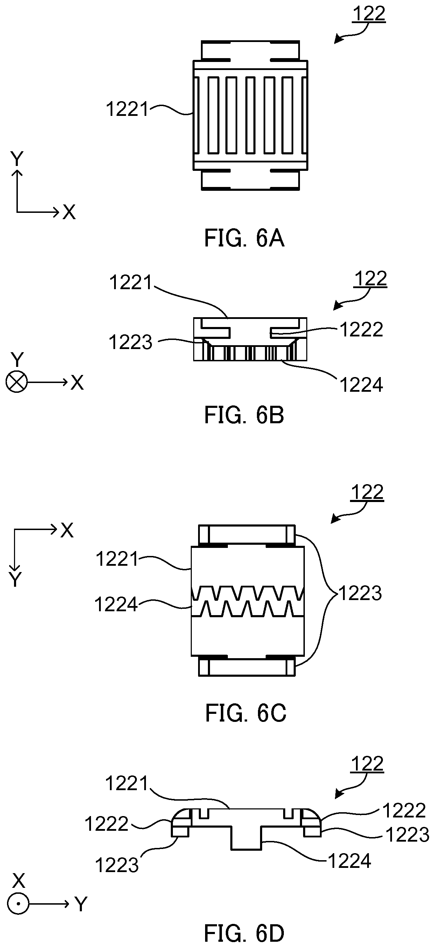

FIG. 6A to FIG. 6D are a plan view, a front view, a bottom view and a side view of a movable part according to the present embodiment, respectively.

Movable part 122 is made of, for example, polypropylene. Movable part 122 has pressure receiving part 1221, spacer 1222, engaging part 1223 and projection 1224, as shown in FIGS. 6A to 6D. Pressure receiving part 1221 forms the top surface of movable part 122. Pressure receiving part 1221 includes the depression, and protrusions 1201. The shape of pressure receiving part 1221 is substantially rectangular, but every corner is slightly cut out by a rectangle. The length of the cutout in X direction is several millimeters, and the length of the cutout in Y direction is substantially the same as the length of elastic supporter 1215 in Y direction. End parts of pressure receiving part 1221 in Y direction have a linear cut formed in X direction from each cutout.

Spacer 1222 is disposed on the bottom surface side of pressure receiving part 1221. The shape of spacer 1222 in plan view is rectangular. The length of spacer 1222 in X direction is less than the distance between the tip ends of elastic supporters 1214 and 1215 of dripper body 121, and the length of spacer 1222 in Y direction is substantially the same as the length of pressure receiving part 1221 in Y direction. The thickness of spacer 1222 is substantially the same as the thickness of elastic supporters 1214 and 1215. Spacer 1222 is disposed at a center of movable part 122 in X direction where spacer 1222 does not touch the tip end of elastic supporter 1214 or elastic supporter 1215.

Engaging part 1223 is connected to the bottom surface side of spacer 1222. The shape of engaging part 1223 in plan view is rectangular. An inclining surface inclined from bottom surface side to the top surface side is formed at both ends of the bottom surface of engaging part 1223 in X direction. The length of engaging part 1223 in X direction is substantially the same as the length of the remaining part of pressure receiving part 1221 in X direction after the cutout at the both end parts. The length of engaging part 1223 in Y direction is substantially the same as the length of pressure receiving part 1221 in Y direction.

Projection 1224 is a part connected to the bottom surface side of engaging part 1223 as shown in FIGS. 6B and 6D. The shape of projection 1224 in plan view is the same as the shape of open part 1216 of dripper body 121 in plan view as shown in FIG. 6C. The protruding height of projection 1224 is the sum of a movable distance of movable part 122 and an additional distance α. The movable distance is a distance from the bottom surface of spacer 1222 to the top surface of connecting part 1213 of dripper body 121, and is 0.5 mm for example. The distance α is a distance for slightly fitting the head of projection 1224 with open part 1216 for the positioning of projection 1224, and is about 0.25 mm for example.

Dripper 120 is assembled by disposing movable part 122 on connecting part 1213 and by pushing movable part 122 into connecting part 1213. In response to the pushing, elastic supporters 1214 and 1215 are bent, and the inclining surfaces of the tips of engaging part 1223 slide on the inclining surfaces of the tips of elastic supporters 1214 and 1215, and thus, elastic supporters 1214 and 1215 are fit in the gap between pressure receiving part 1221 and engaging part 1223. As a result, elastic supporters 1214 and 1215 support pressure receiving part 1221, and engage with engaging part 1223. Movable part 122 is thus supported in dripper body 121 with the elasticity of elastic supporters 1214 and 1215 in a movable manner. Projection 1224 of movable part 122 covers open part 1216 from above and is slightly fit with open part 1216 of dripper body 121. With this fitting, pressure reduction channel 125 is formed.

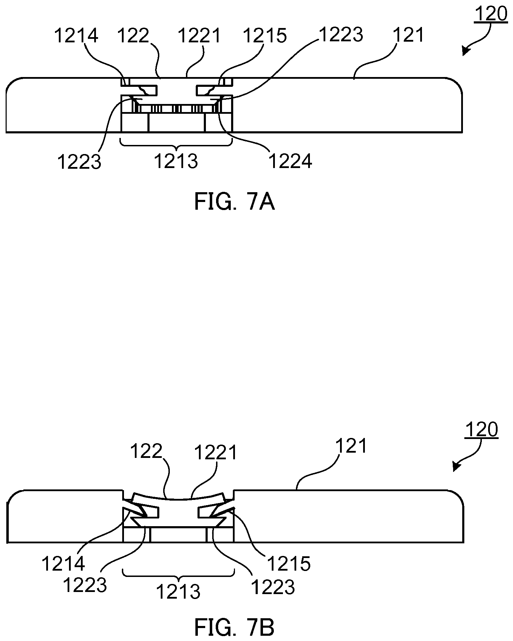

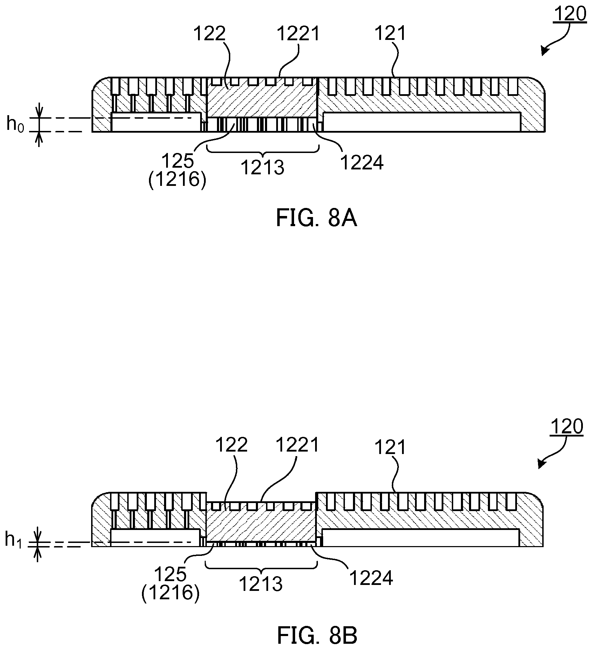

FIG. 7A is a side view schematically illustrating a state before the movement of the movable part of the dripper according to the present embodiment, and FIG. 7B is a side view schematically illustrating a state after the movement of the movable part of the dripper. FIG. 8A is a cross-sectional view schematically illustrating the dripper according to the present embodiment cut along line A-A in FIG. 4C before the movement of the movable part, and FIG. 8B is a cross-sectional view schematically illustrating the dripper cut along line A-A in FIG. 4C after the movement of the movable part.

When a sufficient pressure is not exerted on pressure receiving part 1221, movable part 122 does not move as shown in FIGS. 7A and 8A. In this case, height ho of pressure reduction channel 125 (the distance from the bottom surface of connecting part 1213 to the head of projection 1224) is 0.75 mm for example. The cross-sectional area of pressure reduction channel 125 has a maximum value in this case.

When a sufficient pressure is exerted on pressure receiving part 1221, movable part 122 is biased to the bottom surface side of dripper 120 and elastic supporters 1214 and 1215 supporting movable part 122 are bent as shown in FIGS. 7B and 8B. Movable part 122 thus moves toward the bottom surface side to allow projection 1224 to slide further into open part 1216. Height h₁ of pressure reduction channel 125 in this case is smaller than h₀ and 0.25 mm for example.

When the pressure on pressure receiving part 1221 is released, movable part 122 slides on open part 1216 upward with the elasticity of elastic supporters 1214 and 1215, and the height of pressure reduction channel 125 increases. In this case, the height of pressure reduction channel 125 is h₀. Thus, movable part 122 slides forward or backward on open part 1216 in accordance with the pressure on pressure receiving part 1221, and the height (cross-sectional area) of pressure reduction channel 125 changes.

The operation of dripper 120 in drip irrigation tube 100 will be described.

Liquid is supplied in drip irrigation tube 100 in FIG. 2. The liquid flows in X direction. The liquid fills gaps between protrusions 1201. Protrusions 1201 are arranged in parallel in the longitudinal direction (direction X) on the top surface of dripper 120, and gaps are formed between the both ends of protrusions 1201 in Y direction and side walls of the top surface side recess. With this configuration, the gaps between protrusions 1201 are not completely clogged even when a floating object such as a fallen leaf in the liquid sticks to the top surface of dripper 120. Thus, the gaps to which inflow ports 123 open between protrusions 1201 are filled with liquid at all times. In this manner, protrusions 1201 provide a function as a filter.

Inflow ports 123 are through holes formed in dripper body 121 made of polypropylene; therefore, inflow ports 123 have water repellency specific to polypropylene. When liquid pressure is at a specific value (e.g., 0.005 MPa, which is also referred to as "burst pressure") or higher, the liquid filling the gaps overcomes the liquid surface tension of the water repellency, and flows into inflow part 124 from inflow ports 123. In this manner, inflow ports 123 provide a low-pressure stopping function to inhibit the inflow of liquid whose pressure is lower than a specific value. The low-pressure stopping function can be adjusted by the hole diameter, pitch, number, open part shape, length (thickness of the bottom of the top surface side recess) of inflow ports 123, and the like.

Liquid having a pressure equal to or higher than the burst pressure flows into inflow part 124, and then flows through pressure reduction channel 125. The liquid flowing through pressure reduction channel 125 is depressurized by pressure drop which is caused by the shape of pressure reduction channel 125 in plan view (zigzag shape). The depressurized liquid is received in ejection part 126. The liquid received in ejection part 126 is ejected from ejection port 130. The liquid ejected from ejection port 130 drips from drip irrigation tube 100 into the soil, for example.

When the liquid pressure in drip irrigation tube 100 is in a range from the burst pressure to a specific pressure higher than the burst pressure (e.g., 0.05 MPa, which is also referred to as "movement starting pressure"), movable part 122 does not move. This is because the elasticity of elastic supporters 1214 and 1215 overcome the liquid pressure on pressure receiving part 1221. During this time, the liquid ejection rate from ejection port 130 is substantially constant at a set rate.

When the liquid pressure in drip irrigation tube 100 is equal to or higher than the movement starting pressure, the pressure on pressure receiving part 1221 overcomes the elasticity of elastic supporters 1214 and 1215, and movable part 122 moves in accordance with the pressure toward the bottom surface side of dripper 120 in a range of less than 0.5 mm. As a result, the height of pressure reduction channel 125 becomes, for example, 0.5 mm, and the amount of liquid flowing through pressure reduction channel 125 is limited. In this manner, the increase of a liquid flow rate due to the pressure increase is offset by the decrease of the liquid flow rate caused by reduction of the cross-sectional area of pressure reduction channel 125, and thus a supply rate of the liquid to ejection part 126 is maintained at a substantially constant rate. Consequently, the ejection rate of the liquid from ejection port 130 is substantially maintained at the above-mentioned set rate.

When the liquid pressure in drip irrigation tube 100 is equal to or higher than a specific pressure which is larger than the movement starting pressure (e.g., 0.1 MPa, which is also referred to as "maximum movement pressure"), movable part 122 is further biased by the liquid pressure. As a result, the height of pressure reduction channel 125 minimized (to the above-described h₁, e.g., 0.25 mm), and the amount of the liquid flowing through pressure reduction channel 125 is further limited. In this manner, the increase of a liquid flow rate due to the further pressure increase is offset by the decrease of the liquid flow rate caused by the further reduction of the cross-sectional area of pressure reduction channel 125 and thus the supply rate of the liquid to ejection part 126 is still maintained at a substantially constant rate. Consequently, the ejection rate of the liquid from ejection port 130 is substantially maintained at the above-mentioned set rate.

Next, the functions of guide part 140 will be described.

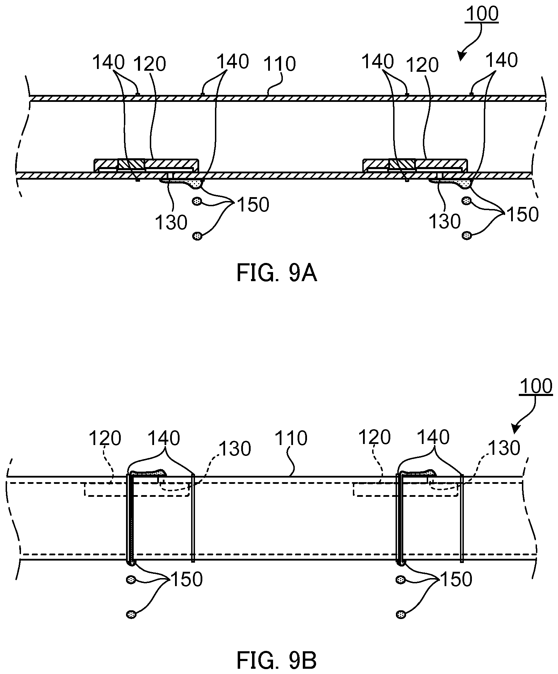

FIG. 9A is a cross-sectional view of drip irrigation tube 100 cut along line A-A in FIG. 1A, schematically illustrating liquid 150 being ejected from drip irrigation tube 100 disposed such that ejection port 130 faces downward, and FIG. 9B is a front view schematically illustrating liquid 150 being ejected from drip irrigation tube 100 disposed such that ejection port 130 faces upward.

Typically, liquid 150 ejected from ejection port 130 is accumulated at the opening of ejection port 130 and drips. Liquid 150 is ejected from ejection port 130 at a set rate, and thus drips into the soil or the like at a properly set rate.

When drip irrigation tubes 100 is obliquely disposed partially or entirely, liquid 150 ejected from ejection port 130 runs along the lowest part of tube 110 and flows toward one side along the longitudinal direction of tube 110, as shown in FIG. 9A. The flow of liquid 150 along the lowest part is blocked by guide part 140. Liquid 150 is supplied to guide part 140 at the above-mentioned set rate, and liquid 150 blocked at guide part 140 drips at the above-mentioned set rate from guide part 140 due to its own weight.

When drip irrigation tube 100 is disposed such that ejection port 130 opens upward, liquid 150 ejected from ejection port 130 is accumulated at the opening of ejection port 130, as shown in FIG. 9B. Liquid 150 accumulated at the opening may flow vertically downward from the opening along the outer circumferential surface of tube 110 in one case, whereas in another case liquid 150 may run along the highest part of tube 110 to flow toward one side along the longitudinal direction of tube 110. The flow of liquid 150 along the highest part is blocked by guide part 140.

Liquid 150 is supplied to guide part 140 at the above-mentioned set rate. Therefore, liquid 150 blocked at guide part 140 flows downward on the outer circumferential surface of tube 110 along guide part 140 due to its weight. Thus, liquid 150 is guided to the lowest part of tube 110, and drips from the lowest part of tube 110 at the above-mentioned set rate. As described above, guide part 140 exhibits a drip-facilitating function of guiding liquid 150 flowing along the longitudinal direction of tube 110 to allow liquid 150 to drip into the soil from guide part 140.

Drip irrigation tube 100 according to the present embodiment has guide part 140, as described above. Thus, according to drip irrigation tube 100, it is possible to supply liquid 150 in tube 110 into the soil from guide part 140 positioned in the vicinity of ejection port 130 in the longitudinal direction of tube 110 at a rate set by dripper 120, even when liquid 150 ejected from ejection port 130 runs in the longitudinal direction of tube 110.

Further, guide part 140 forms a step difference on the outer circumferential surface of tube 110. Thus, liquid 150 being blocked is subjected to stronger influence of surface tension at the edge of the step difference. Accordingly, guide part 140 which forms the step difference can further prevent liquid 150 from flowing further in the longitudinal direction of tube 110 beyond guide part 140. Therefore, guide part 140 is more effective from the perspective of enhancing the above-mentioned drip-facilitating function.

Dripper 120 according to the present embodiment includes, as described above, dripper body 121 forming a channel having a part of pressure reduction channel 125 (open part 1216) opened to the inner space of tube 110, and movable part 122 disposed to cover open part 1216 from the space side and be movable forward or backward in open part 1216 in accordance with the liquid pressure in drip irrigation tube 100. Thus, dripper 120 can suppress changes in the ejection amount due to the increase of the pressure of liquid flowing into dripper 120. Therefore, dripper 120 can eject liquid at a constant flow rate regardless of the change in the pressure.

Further, dripper 120 can be composed with only two members, i.e., dripper body 121 and movable part 122.

As described above, conventional drippers are formed by assembling the three members, and thus an assembly error may occur in the drippers. In particular, the assembly error in the diaphragms may cause variations in operation of the diaphragms, and variations in the ejection amount of irrigation liquid.

Further, while the dripper is typically formed of an inexpensive resin such as polypropylene, the diaphragm is made of a more expensive elastic material member such as a silicone rubber film. Use of such different materials has a room for improvement in terms of reduction of a material cost.

In some situation, several hundreds of drippers are disposed in one drip irrigation tube, and in that case pressure drop of the irrigation liquid is large when the drippers bonded on the inner wall of the tube are large. For this reason, in the case where a long drip irrigation tube is used, the pressure for supplying liquid to the tube is required to be high, and as a result the liquid ejection amount of the drippers may be unstabilized. Therefore, it is desired to reduce the size of the drippers from the perspective of suppressing the pressure drop of the liquid in the tube.

Further, a dripper which can be produced with a single inexpensive material and a smaller number of components is desired from the perspective of suppressing the material cost and the production cost of the dripper.

Dripper 120 is capable of stabilizing the ejection amount of irrigation liquid and reducing production cost, and is configured for the purpose of providing a drip irrigation tube having the dripper. As described above, dripper 120 can be composed with only two members, i.e., dripper body 121 and movable part 122, and thus the size (thickness) of dripper 120 can be further reduced in comparison with conventional drippers composed of three members and having a diaphragm.

Since the size of drippers 120 can be further reduced, drippers 120 can further suppress an increase of liquid pressure drop in tube 110 in comparison with the conventional drippers. As a result, the liquid in drip irrigation tube 100 can be conveyed farther with a low pressure. Therefore, the present embodiment can provide an effect of ejecting liquid at a stable amount even when longer drip irrigation tube 100 is used.

Dripper 120 can further reduce material cost and production cost (assembling cost) in comparison with the conventional drippers.

Dripper body 121 further including inflow ports 123 having the low-pressure stopping function is more effective from the perspective of further suppressing the pressure of the liquid flowing into dripper 120 from the inside of drip irrigation tube 100 for the purpose of efficient use of the liquid.

Dripper 120 does not have a diaphragm in ejection part 126; therefore, no diaphragm would be damaged when forming ejection port 130 of drip irrigation tube 100 after welding dripper 120. This means the pressure regulation function of dripper 120 would not be impaired even when ejection port 130 is formed after welding dripper 120. The present embodiment thus can produce drip irrigation tube 100 more easily, and further enhance the reliability of drip irrigation tube 100.

Dripper body 121 has inflow part 124 and ejection part 126 connected to each other only with pressure reduction channel 125. This makes it possible to reduce the length of dripper body 121 in X direction. Dripper 120 is thus advantageous also from the perspective of reduction in the size of dripper 120 in X direction.

### [Embodiment 2]

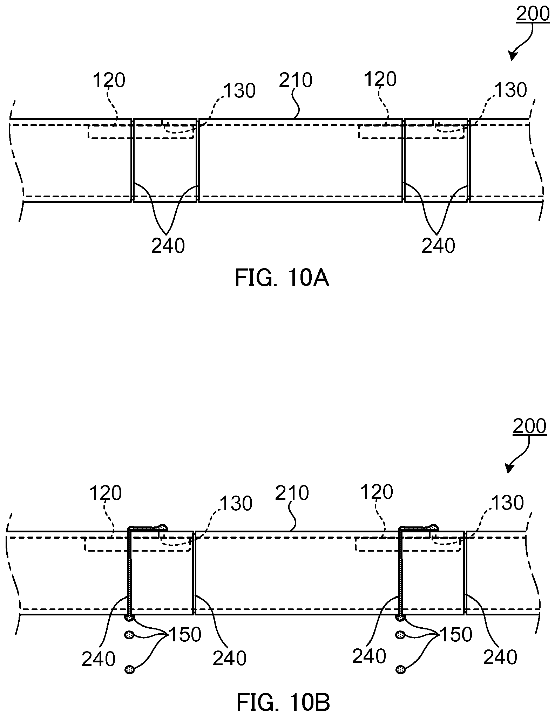

FIG. 10A is a schematic front view of a drip irrigation tube according to Embodiment 2 disposed such that ejection ports face upward, and FIG. 10B schematically illustrates liquid being ejected from the drip irrigation tube. Drip irrigation tube 200 according to the present embodiment is configured in the same manner as drip irrigation tube 100 according to Embodiment 1 except that for the mode of the guide part.

Drip irrigation tube 200 includes tube 210, drippers 120 and guide parts 240. Tube 210 is configured in the same manner as tube 110 except that guide parts 240 are formed in place of guide parts 140.

Guide part 240 is a recess provided circumferentially on the outer circumferential surface of tube 210. The positions of guide parts 240 in the longitudinal direction of tube 210 are the same as the positions of guide parts 140 in tube 110. The depth of guide part 240 may be constant, different, an average value, or the minimum value.

The width of guide part 240 is, for example, 3 mm, and the depth of guide part 240 is, for example, 0.1 mm. Guide part 240 is formed by cutting with a cutter, for example.

The width of guide part 240 can be appropriately determined within a range smaller than the distance between ejection ports 130 in the longitudinal direction of tube 210. The width of guide part 240 is preferably 1 to 20 mm, and more preferably 2 to 10 mm, from the perspective of enhancement of drip-facilitating function brought by the occurrence of capillary phenomenon of liquid 150 flowing into guide part 240.

The depth of guide part 240 can be appropriately determined within a range smaller than the wall thickness of tube 210. The depth of guide part 240 is preferably 10 to 50% of the wall thickness of tube 210, and more preferably 25 to 50% thereof, from the perspective of durability of tube 210. The depth of guide part 240 is preferably 0.02 to 0.1 mm, and more preferably 0.05 to 0.1 mm, from the perspective of enhancement of drip-facilitating function due to the occurrence of capillary phenomenon.

When drip irrigation tube 200 is disposed such that ejection port 130 faces upward, liquid 150 ejected from ejection port 130 and flowing in the longitudinal direction of tube 210 to reach guide part 240 is subjected to the occurrence of stronger surface tension at the edge of a step difference formed by guide part 240. Accordingly, the flow of liquid 150 in the longitudinal direction is blocked by guide part 240, and liquid 150 stays on the outer circumferential surface of tube 210 at guide part 240.

Staying liquid 150 flows downward on the outer circumferential surface of tube 210 along guide part 240. Alternatively, liquid 150 flows into guide part 240. When capillary phenomenon occurs to liquid 150 flowing into guide part 240, the flow of liquid 150 is accelerated in the circumferential direction of tube 210. Then, liquid 150 flows downward in guide part 240 and in the vicinity thereof along guide part 240. Thus, due to the drip-facilitating function of guide part 240, liquid 150 is guided to the lowest part of tube 210, and drips from the lowest part of tube 210 at the above-mentioned set rate.

In drip irrigation tube 200, guide part 240 can generate at the step difference stronger surface tension in the longitudinal direction of tube 210 for liquid 150 having reached guide part 240 from ejection port 130. Accordingly, it is possible to enhance the effect of blocking the flow of liquid 150 in the longitudinal direction more than drip irrigation tube 100 according to Embodiment 1. In addition, liquid 150 flowing into guide part 240 is more likely to flow downward in guide part 240 in the circumferential direction of tube 210 than drip irrigation tube 100. When guide part 240 has such a width as to generate the capillary phenomenon of liquid 150, the flow of liquid 150 in guide part 240 is further accelerated. Thus, guide part 240 is more effective from the perspective of enhancement of the drip-facilitating function.

### [Embodiments 3 and 4]

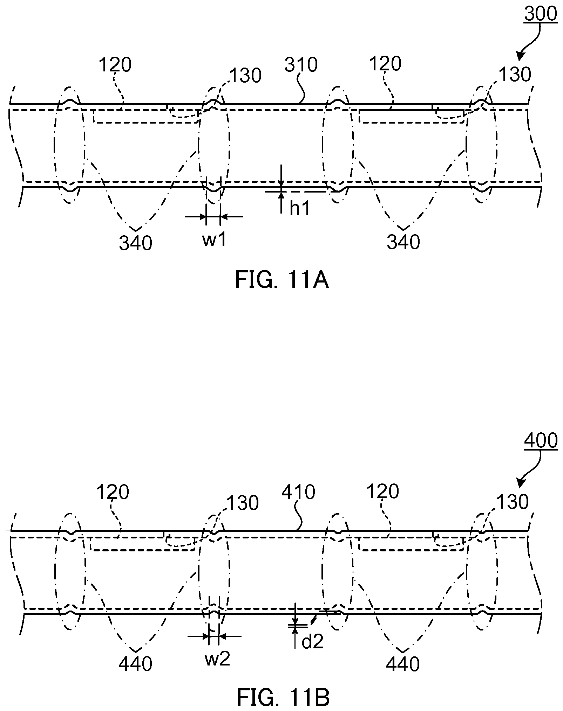

FIG. 11A is a schematic front view of a drip irrigation tube according to Embodiment 3 of the present invention, and FIG. 11B is a schematic front view of a drip irrigation tube according to Embodiment 4 of the present invention. Drip irrigation tube 300 according to Embodiment 3 and drip irrigation tube 400 according to Embodiment 4 are both configured in the same manner as drip irrigation tube 100 according to Embodiment 1 except for the mode of the guide part.

Drip irrigation tube 300 includes tube 310, drippers 120 and guide parts 340. Tube 310 is configured in the same manner as tube 110 except that guide parts 340 are formed in place of guide parts 140. Further, drip irrigation tube 400 includes tube 410, drippers 120 and guide parts 440. Tube 410 is also configured in the same manner as tube 110 except that guide parts 440 are formed in place of guide parts 140. Guide parts 340 in the longitudinal direction of tube 310 and guide parts 440 in the longitudinal direction of tube 410 are both positioned at two locations, for single ejection port 130, such that dripper 120 is interposed therebetween in the longitudinal direction of tubes 310 and 410, respectively.

Guide part 340 is a swelling provided circumferentially on the outer circumferential surface of tube 310, as shown in FIG. 11A. The variation in the surface shape of the swelling is continuous in the longitudinal direction of tube 310. The height of guide part 340 is, for example, about 2 mm, and the width of guide part 340 is, for example, about 3 mm. The height of guide part 340 is the distance from the outer circumferential surface of tube 310 to the apex of the swelling in the radial direction of tube 310 (h1 in FIG. 11A). The width of guide part 340 is a length of a portion, which traverses guide part 340, of a straight line along the longitudinal direction of tube 310 on the outer circumferential surface of tube 310 (w1 in FIG. 11A). Guide part 340 is formed, for example, by intermittently reducing the extrusion rate of extrusion molding in producing tube 310.

Guide part 440 is a depression provided circumferentially on the outer circumferential surface of tube 410, as shown in FIG. 11B. The variation in the surface shape of the depression is continuous in the longitudinal direction of tube 410. The depth of guide part 440 is, for example, about 0.1 mm, and the width of guide part 440 is, for example, about 3 mm. The depth of guide part 440 is the distance from the outer circumferential surface of tube 410 to the bottom of the depression in the radial direction of tube 410 (d2 in FIG. 11B). The width of guide part 440 is a length of a portion, which traverses guide part 440, of a straight line along the longitudinal direction of tube 410 on the outer circumferential surface of tube 410 (w2 in FIG. 11B). Guide part 440 is formed, for example, by intermittently increasing the extrusion rate of extrusion molding in producing tube 410.

When drip irrigation tube 300 is disposed such that ejection port 130 faces upward, liquid 150 having reached guide part 340 from ejection port 130 along the longitudinal direction of tube 310 is blocked by blocking effect due to the swelling of guide part 340. Accordingly, liquid 150 staying on the outer circumferential surface of tube 310 flows downward along guide part 340. Thus, liquid 150 is guided to the lowest part of tube 310 by the drip-facilitating function of guide part 340, and drips from the lowest part at the above-mentioned set rate.

When drip irrigation tube 400 is disposed such that ejection port 130 faces upward, liquid 150 flowing along the longitudinal direction of tube 410 from ejection port 130 to reach guide part 440 flows into guide part 440, and stays there. Thus, the flow of liquid 150 in the longitudinal direction on the outer circumferential surface of tube 410 is blocked by blocking effect due to the depression. Liquid 150 staying at guide part 440 flows downward in guide part 440. Thus, liquid 150 is guided to the lowest part of tube 410 by the drip-facilitating function of guide part 440, and drips from the lowest part at the above-mentioned set rate.

Thus, drip irrigation tube 300 according to Embodiment 3 and drip irrigation tube 400 according to Embodiment 4 are both capable of facilitating the drip of liquid 150 in guide parts 340 and 440, respectively.

### [Embodiment 5]

Embodiment 5 is the same as the above-mentioned Embodiment 1 except for the structure of the dripper. A dripper according to the present embodiment is different from the dripper of Embodiment 1 in that the dripper further has a communication channel for connecting a pressure reduction channel with an ejection part, and that a movable part changes the cross-sectional area of the communication channel. The configurations same as those of Embodiment 1 are given the same symbols as those of Embodiment 1, and the description thereof is omitted.

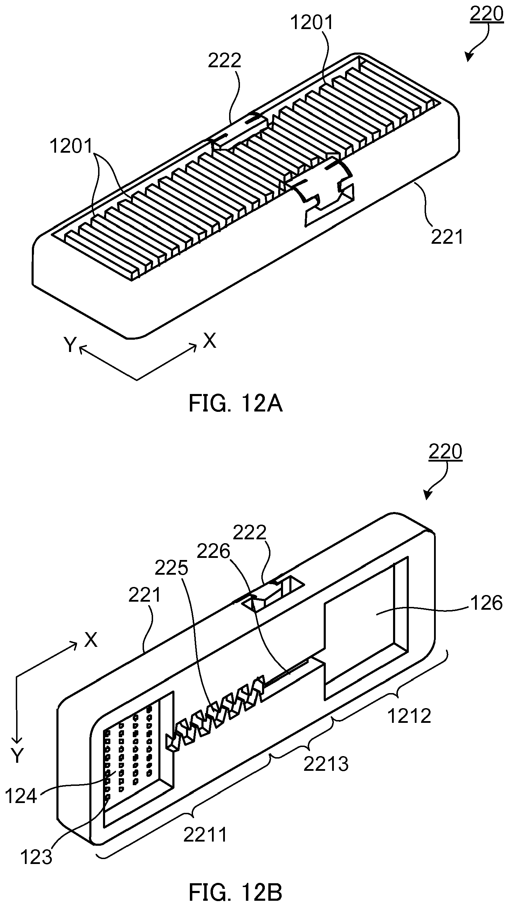

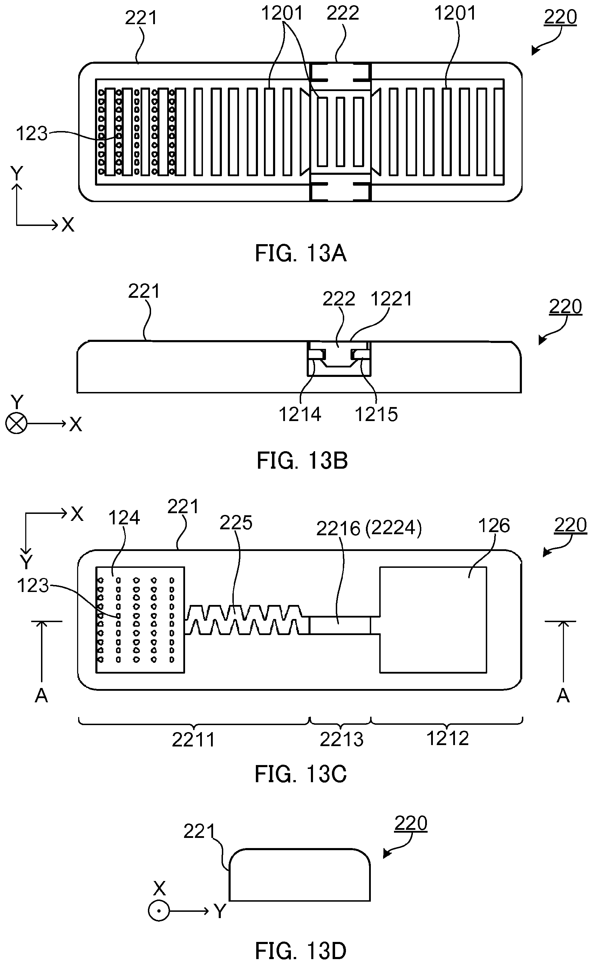

FIG. 12A illustrates an upper surface, a front surface, and a side surface of the dripper according to the present embodiment, and FIG. 12B illustrates a bottom surface, the front surface and the side surface of the dripper. FIG. 13A to FIG. 13D are a plan view, a front view, a bottom view and a side view of the dripper according to the present embodiment, respectively.

Dripper 220 according to the present embodiment is composed of dripper body 221 and movable part 222. Dripper body 221 has first end part 2211, second end part 1212 and connecting part 2213. First end part 2211 includes inflow ports 123, inflow part 124 and pressure reduction channel 225. Pressure reduction channel 225 is configured with a groove recessed from the bottom surface of dripper body 221. The shape of pressure reduction channel 225 in plan view is the same as the shape of pressure reduction channel 125 in plan view.

Connecting part 2213 is formed in the same manner as connecting part 1213 except that connecting part 2213 includes open part 2216, a part of linear shaped communication channel 226 in plan view other than the both ends of communication channel 226, which opens to the inner space of tube 110; and that the shape of bottom surface of connecting part 2213 in plan view is rectangular. Open part 2216 is configured of a cut (slit) extending through connecting part 2213 in the thickness direction of connecting part 2213. The shape of open part 2216 in plan view is linear.

Movable part 222 is formed in the same manner as movable part 122 except for projection 2224. The shape of projection 2224 in plan view is the same as the shape of open part 2216 in plan view, as shown in FIG. 13C. Projection 2224 covers open part 2216 from above and partially fits with open part 2216, and thus communication channel 226 for connecting pressure reduction channel 225 to ejection part 126 is formed.

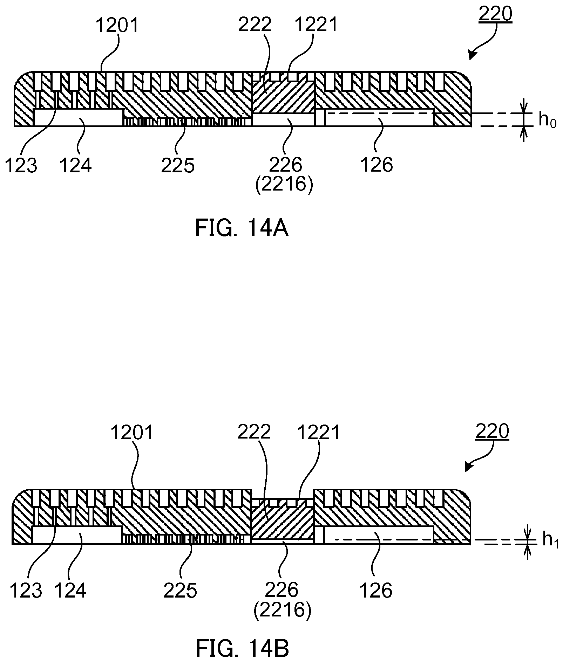

FIG. 14A is a cross-sectional view schematically illustrating the dripper according to the present embodiment cut along line A-A in FIG. 13C before the movement of the movable part, and FIG. 14B is a cross-sectional view schematically illustrating the dripper cut along line A-A in FIG. 13C after the movement of the movable part.

In the same manner as movable part 122 in Embodiment 1, movable part 222 slides at open part 2216 forward or backward from the bottom surface side of dripper 220 in a distance in accordance with the pressure on pressure receiving part 1221 to change the height (cross-sectional area) of communication channel 226 in a range of h₀ to h₁, for example, from 0.25 to 0.75 mm in accordance with the pressure.

The present embodiment provides the same effects as those of Embodiment 1. Since dripper 220 according to the present embodiment further has communication channel 226, dripper 220 can change a cross-sectional area of a part whose shape is simpler than that of pressure reduction channel 225 in the channel formed with dripper 220. The shape of projection 2224 of movable part 222 in plan view thus can be further simplified. Therefore, the present embodiment is more effective from the perspective of simplifying the production of movable part 222 and assemblage of dripper 220.

### [Embodiments 6 and 7]

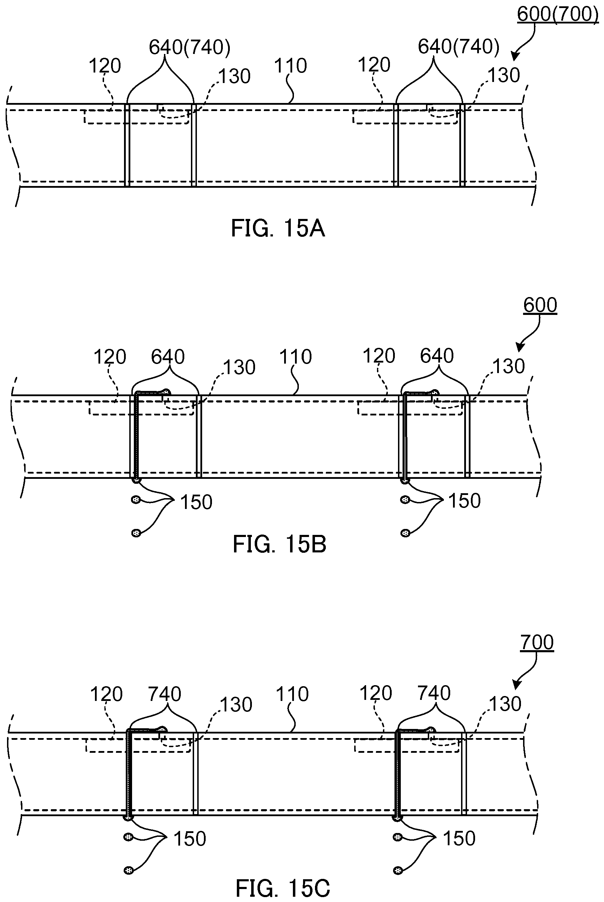

FIG. 15A is a schematic front view of a drip irrigation tube according to Embodiment 6 or 7 of the present invention disposed such that ejection ports face upward, FIG. 15B schematically illustrates liquid being ejected from the drip irrigation tube according to Embodiment 6, and FIG. 15C schematically illustrates liquid being ejected from the drip irrigation tube according to Embodiment 7. Drip irrigation tube 600 according to Embodiment 6 and drip irrigation tube 700 according to Embodiment 7 are configured in the same manner as drip irrigation tube 100 according to Embodiment 1 except for the mode of the guide part.

Drip irrigation tube 600 is configured in the same manner as drip irrigation tube 100 according to Embodiment 1 except that guide parts 640 are formed on the outer circumferential surface of tube 110 in place of guide parts 140. Further, drip irrigation tube 700 is configured in the same manner as drip irrigation tube 100 according to Embodiment 1 except that guide parts 740 are formed on the outer circumferential surface of tube 110 in place of guide parts 140.

Guide part 640 is a part having been subjected to a water-repellent treatment on tube 110. Guide part 640 has higher water repellency than the outer wall of tube 110, and is composed of a water-repellent coating film, for example. Examples of the water-repellent coating film include silicone resin coating film and fluorine resin coating film. Guide part 740 is a part having been subjected to a hydrophilic treatment on tube 110. Guide part 740 has higher hydrophilicity than the outer wall of tube 110, and is formed by irradiation of UV-rays, for example. The width of guide parts 640 and 740 are, for example, 3 to 20 mm.

When drip irrigation tube 600 is disposed such that ejection port 130 faces upward, liquid 150 ejected from ejection port 130 flows in the longitudinal direction of tube 110 to reach guide part 640, as shown in FIG. 15B. The flow of liquid 150 in the longitudinal direction is blocked by guide part 640 having water repellency. Liquid 150 stays on the outer circumferential surface of tube 110 at guide part 640, and then flows downward on the outer circumferential surface of tube 110 along guide part 640. Thus, liquid 150 is guided to the lowest part of tube 110 by the drip-facilitating function of guide part 640, and drips from the lowest part of tube 110 at the above-mentioned set rate.

When drip irrigation tube 700 is disposed such that ejection port 130 faces upward, liquid 150 ejected from ejection port 130 flows in the longitudinal direction of tube 110 to reach guide part 740, as shown in FIG. 15C. Since the outer wall of tube 110 has lower hydrophilicity than guide part 740, the flow of liquid 150 having reached guide part 740 in the longitudinal direction of tube 110 is blocked by a boundary between guide part 740 and the outer wall of tube 110. Then, liquid 150 having reached guide part 740 flows along guide part 740, which is more hydrophilic than the outer wall of tube 110. In this manner, liquid 150 is guided in the circumferential direction of tube 110, and flows downward on the outer circumferential surface of tube 110 along guide part 740. Thus, liquid 150 is guided to the lowest part of tube 110 by the drip-facilitating function of guide part 740, and drips from the lowest part of tube 110 at the above-mentioned set rate.

Both guide parts 640 and 740 do not require substantial thickness. Thus, it is possible to dispose them on a tube regardless of the thickness of the tube wall. In addition, since the outer diameter of tube 110 is constant, stress is unlikely to focus on guide parts 640 and 740. Therefore, guide parts 640 and 740 are more effective from the perspective of suppressing the rupture of tube 110 at a guide part due to stress focusing on the guide part in such cases of storing tube 110 in a wound state or drawing tube 110 when tube 110 is laid.

While the embodiments of the present invention have been described hereinabove, the scope of the present invention is defined by the scope of the appended claims. For example, tube 110 may be a seamless tube, or a tube made by joining slender sheet(s) along the longitudinal direction.

The ejection port may be a gap formed, at a joint part of the sheet(s), to allow communication between the inside and the outside of tube 110, or a pipe sandwiched by the sheet(s) at the joint part. Further, the shape of the ejection port in the axis direction can be appropriately determined within such a range as to enable the ejection port to eject liquid in tube 110 at an intended rate, and does not need to be linear. Examples of the tube capable of ejecting liquid from the ejection port at the intended rate include a tube having ejection ports each having a specific hole diameter, and a tube in which the pressure reduction channel is formed at the joint part through the joint of the sheet(s) each having a depression, which serves as the pressure reduction channel, formed on the surface of the sheet.

While a dripper is disposed in the tube in the above-mentioned embodiments, no dripper needs to be disposed if an ejection port can discharge liquid in tube 110 at an intended rate. While a dripper is disposed such that the inflow part is located on the upstream side in the liquid flow direction in the tube when the dripper is disposed in tube 110, the dripper may be disposed such that the inflow part is located on a downstream side. The orientations of the drippers may be identical to each other or different from each other.

While the low-pressure stopping function based on dripper body material (polypropylene) is imparted to the dripper in the above-mentioned embodiments, the low-pressure stopping function may be imparted to the dripper by forming a burr protruding to the inner space of the tube from the open part edge on the top surface side of an inflow port, or by covering the open part edge and internal wall of the inflow port with a hydrophobic film. The low-pressure stopping function can be further enhanced by combining multiple methods of imparting the low-pressure stopping function.

While the same material (polypropylene) is used for the dripper body and the movable part in the embodiments, different materials may be used.

Methods other than the method of changing the height of the pressure reduction channel or the communication channel may be employed to change the cross-sectional area of the channel formed in the dripper. For example, the cross-sectional area may be changed using a straightening plate or a baffle plate which is movable forward or backward in the pressure reduction channel or the communication channel.

While the movable part is moved forward or backward in the open part of the dripper body with plate springs formed on the dripper sides in accordance with the liquid pressure in the tube in the above-mentioned embodiments, any other means may be employed to move the movable part in accordance with the pressure. For example, it is also possible to move the movable part forward or backward in the open part by employing a movable part composed of an elastic body and expanding or contracting the elastic body in accordance with the pressure.

### Industrial Applicability

According to the present invention, it is possible to provide a drip irrigation tube capable of dripping liquid to be dripped from the vicinity of an ejection port. Also, it is possible for the present invention to easily provide a drip irrigation tube suitable for dripping liquid to be dripped at a proper rate using the pressure of the liquid. Therefore, further widespread use of such tube in the technical field of drip irrigations and endurance tests where a long term dripping is required can be expected, and further development in the technical field can be expected.

### Reference Signs List

100, 200, 300, 400, 600, 700 Drip irrigation tube
110, 210, 310, 410 Tube
120, 220 Dripper
121, 221 Dripper body
122, 222 movable part
123 Inflow port
124 Inflow part
125, 225 Pressure reduction channel
126 Ejection part
130 Ejection port
140, 240, 340, 440, 640, 740 Guide part
150 Liquid
226 Communication channel
1201 Protrusion
1211, 2211 First end part
1212 Second end part
1213, 2213 Connecting part
1214, 1215 Elastic supporter
1216, 2216 Open part
1221 Pressure receiving part
1222 Spacer
1223 Engaging part
1224, 2224 Projection

## Claims

1. A drip irrigation tube (100) comprising:
a tube (110) to which liquid is supplied;
an ejection port (130) allowing communication between an inside and an outside of the tube (110) for ejecting the liquid from the inside of the tube (110); and
guide parts (140) for guiding the liquid in a circumferential direction of the tube (110), the guide parts (140) being provided circumferentially at two locations, for the ejection port (130), on an outer circumferential surface of the tube (110) such that the ejection port (130) is interposed in a longitudinal direction of the tube (110);
**characterized in that**
each of the guide parts (140) is one or more member selected from the group consisting of a recess (240), a depression (440), a part (640) on the tube (110) being subjected to a water-repellent treatment, and a part (740) on the tube (110) being subjected to a hydrophilic treatment, which is provided circumferentially on the outer circumferential surface of the tube (110), and
two guide parts (140, 240, 440, 640, 740) are disposed between two ejection ports (130) in the longitudinal direction of the tube (110).

2. The drip irrigation tube (100) according to claim 1, wherein each of the guide parts (140) is a different diameter part having an outer diameter different from an outer diameter of the tube (110).

3. The drip irrigation tube (100) according to claim 1 or 2, further comprising: a dripper (120), disposed on an inner wall of the tube (110), for ejecting liquid in the tube (110) from the ejection port (130) at a set rate.

4. The drip irrigation tube (100) according to claim 3, wherein:
the dripper (120) is configured to form a channel by bonding to an inner wall of the tube (110) at a position where the dripper (120) covers the ejection port (130) formed on a wall of the tube (110), the channel allowing a space in the tube (110) and the ejection port (130) to communicate with each other and including a pressure reduction channel (125) that allows liquid flowing into the dripper (120) from the space to flow toward the ejection port (130) while depressurizing the liquid; and
the dripper (120) comprises:
a dripper body (121) configured to form the channel by bonding to the inner wall of the tube (110), the channel including an open part (1216) which opens to the space, and
a movable part (122) for changing a cross-sectional area of the channel at the open part (1216) in accordance with a pressure of the liquid in the space, the movable part (122) disposed to cover the open part (1216) from a space side such that the movable part (122) is movable forward or backward in the open part (1216) in accordance with the pressure of the liquid in the space.

5. The drip irrigation tube (100) according to claim 4, wherein:
the channel includes an inflow part (124) that receives the liquid flowing from the space, the pressure reduction channel (125) connected to the inflow part (124), and an ejection part (126) that is connected to the pressure reduction channel (125) and receives the depressurized liquid; and
the open part (1216) is included in the pressure reduction channel (125).

6. The drip irrigation tube (100) according to claim 4, wherein:
the channel includes an inflow part (124) that receives the liquid flowing from the space, the pressure reduction channel (125) connected to the inflow part (124), a communication channel (226) that is connected to the pressure reduction channel (125) and allows depressurized liquid to flow therethrough, and an ejection part (126) that is connected to the communication channel (226) and receives the depressurized liquid; and
the open part (1216) is included in the communication channel (226).

7. The drip irrigation tube (100) according to claim 5 or 6, wherein:
the dripper body (121) further includes an inflow port (123) that allows the space and the inflow part (124) to communicate with each other; and
the inflow port (123) has a low-pressure stopping function to allow for inflow of a liquid having a pressure equal to or higher than a set value in the space.

## Patentansprüche

1. Tropfbewässerungsrohr (100), umfassend:
ein Rohr (110), dem Flüssigkeit zugeführt wird;
eine Abgabeöffnung (130), die eine Verbindung zwischen einem Inneren und einem Äußeren des Rohrs (110) zum Abgeben der Flüssigkeit aus dem Inneren des Rohrs (110) ermöglicht; und
Führungsteile (140) zum Leiten der Flüssigkeit in eine Umfangsrichtung des Rohrs (110), wobei die Führungsteile (140) umlaufend an zwei Stellen für den Abgabeöffnung (130) auf einer Außenumfangsfläche des Rohrs (110) so vorgesehen sind, dass die Abgabeöffnung (130) in einer Längsrichtung des Rohrs (110) dazwischen liegt;
**dadurch gekennzeichnet, dass**
jeder der Führungsteile (140) aus einem oder mehreren Elementen besteht, gewählt aus der Gruppe, bestehend aus einer Nut (240), einer Eindellung (440), einem Teil (640) auf dem Rohr (110), der einer wasserabstoßenden Behandlung unterzogen ist, und einem Teil (640) auf dem Rohr (110), der einer wasserbindenden Behandlung unterzogen ist, der umlaufend auf der Außenumfangsfläche des Rohrs (110) vorgesehen ist, und
zwei Führungsteile (140, 240, 440, 640, 740) zwischen zwei Abgabeöffnungen (130) in der Längsrichtung des Rohrs (110) angeordnet sind.

2. Tropfbewässerungsrohr (100) nach Anspruch 1, wobei jeder der Führungsteile (140) ein Teil mit anderem Durchmesser mit einem anderen Außendurchmesser als ein Außendurchmesser des Rohrs (110) ist.

3. Tropfbewässerungsrohr (100) nach Anspruch 1 oder 2, weiter umfassend:
einen Tropfer (120), angeordnet an einer Innenwand des Rohrs (110) zum Abgeben von Flüssigkeit in dem Rohr (110) aus der Abgabeöffnung (130) in einer festgelegten Durchflussrate.

4. Tropfbewässerungsrohr (100) nach Anspruch 3, wobei:
der Tropfer (120) so gestaltet ist, dass er durch ein Ankleben an eine Innenwand des Rohrs (110) einen Kanal an einer Stelle bildet, wo der Tropfer (120) die an einer Wand des Rohrs (110) ausgebildete Abgabeöffnung (130) abdeckt, wobei der Kanal ermöglicht, dass ein Raum in dem Rohr (110) und die Abgabeöffnung (130) miteinander in Verbindung stehen, und einen Druckreduzierungskanal (125) enthält, der ermöglicht, dass in den Tropfer (120) aus dem Raum strömende Flüssigkeit zur Abgabeöffnung (130) strömt, während er die Flüssigkeit druckreduziert; und
der Tropfer (120) umfasst:
einen Tropferhauptteil (121), so gestaltet, dass er durch ein Ankleben an die Innenwand des Rohrs (110) den Kanal bildet, wobei der Kanal einen offenen Teil (1216) enthält, der sich zum Raum öffnet, und
einen beweglichen Teil (122) zum Ändern einer Querschnittsfläche des Kanals am offenen Teil (1216) gemäß einem Druck der Flüssigkeit in dem Raum, wobei der bewegliche Teil (122) so angeordnet ist, dass er den offenen Teil (1216) von einer Raumseite so abdeckt, dass der bewegliche Teil (122) vor und zurück im offenen Teil (1216) gemäß dem Druck der Flüssigkeit in dem Raum beweglich ist.

5. Tropfbewässerungsrohr (100) nach Anspruch 4, wobei:
der Kanal einen Einströmteil (124), der die aus dem Raum strömende Flüssigkeit empfängt, den Druckreduzierungskanal (125), der mit dem Einströmteil (124) verbunden ist, und einem Abgabeteil (126) enthält, der mit dem Druckreduzierungskanal (125) verbunden ist und die druckreduzierte Flüssigkeit empfängt; und
der offene Teil (1216) im Druckreduzierungskanal (125) enthalten ist.

6. Tropfbewässerungsrohr (100) nach Anspruch 4, wobei:
der Kanal einen Einströmteil (124), der die aus dem Raum strömende Flüssigkeit empfängt, den Druckreduzierungskanal (125), der mit dem Einströmteil (124) verbunden ist, einen Verbindungskanal (226), der mit dem Druckreduzierungskanal (125) verbunden ist und ermöglicht, dass druckreduzierte Flüssigkeit dort hindurchströmt, und einen Abgabeteil (126) enthält, der mit dem Verbindungskanal (226) verbunden ist und die druckreduzierte Flüssigkeit empfängt; und
der offene Teil (1216) im Verbindungskanal (226) enthalten ist.

7. Tropfbewässerungsrohr (100) nach Anspruch 5 oder 6, wobei:
der Tropferhauptteil (121) weiter eine Einströmöffnung (123) enthält, die ermöglicht, dass der Raum und der Einströmteil (124) miteinander in Verbindung stehen; und
die Einströmöffnung (123) eine Niederdruck-Stoppfunktion aufweist, um ein Einströmen einer Flüssigkeit mit einem Druck gleich oder höher einem Sollwert in dem Raum zu ermöglichen.

## Revendications

1. Tube (100) d'irrigation goutte-à-goutte comportant :
un tube (110) auquel est amené un liquide ;
un orifice d'éjection (130) permettant la communication entre un intérieur et un extérieur du tube (110) pour éjecter le liquide depuis l'intérieur du tube (110) ; et
des pièces de guidage (140) pour guider le liquide dans une direction circonférentielle du tube (110), les pièces de guidage (140) étant prévues circonférentiellement en deux emplacements, pour l'orifice d'éjection (130), sur une surface circonférentielle extérieure du tube (110), de sorte que l'orifice d'éjection (130) soit interposé dans une direction longitudinale du tube (110) ;
**caractérisé en ce que**
chacune des pièces de guidage (140) est un ou plusieurs éléments sélectionnés dans le groupe constitué par un retrait (240), une dépression (440), une pièce (640) sur le tube (110) soumise à un traitement hydrofuge, et une pièce (740) sur le tube (110) soumise à un traitement hydrophile, qui est prévue circonférentiellement sur la surface circonférentielle extérieure du tube (110), et
deux pièces de guidage (140, 240, 440, 640, 740) sont disposées entre deux orifices d'éjection (130) dans la direction longitudinale du tube (110).

2. Tube (100) d'irrigation goutte-à-goutte selon la revendication 1, dans lequel chacune des pièces de guidage (140) est une pièce de diamètre différent présentant un diamètre extérieur différent d'un diamètre extérieur du tube (110).

3. Tube (100) d'irrigation goutte-à-goutte selon la revendication 1 ou 2, comprenant en outre :
un goutteur (120) disposé sur une paroi intérieure du tube (110) pour éjecter du liquide dans le tube (110) depuis l'orifice d'éjection (130) à une vitesse déterminée.

4. Tube (100) d'irrigation goutte-à-goutte selon la revendication 3, dans lequel :
le goutteur (120) est configuré pour former un canal en se raccordant à une paroi intérieure du tube (110) à une position où le goutteur (120) recouvre l'orifice d'éjection (130) formé sur une paroi du tube (110), le canal permettant à un espace dans le tube (110) et à l'orifice d'éjection (130) de communiquer l'un avec l'autre et comprenant un canal de réduction de pression (125) qui permet au liquide s'écoulant dans le goutteur (120) depuis l'espace de s'écouler vers l'orifice d'éjection (130) tout en dépressurisant le liquide ; et
le goutteur (120) comprend :
un corps de goutteur (121) configuré pour former le canal par raccordement à la paroi intérieure du tube (110), le canal comprenant une partie ouverte (1216) qui s'ouvre sur l'espace, et
une partie mobile (122) pour changer une aide de section transversale du canal au niveau de la partie ouverte (1216) conformément à une pression du liquide dans l'espace, la partie mobile (122) étant disposée pour couvrir la partie ouverte (1216) d'un côté de l'espace de sorte que la partie mobile (122) soit mobile vers l'avant ou vers l'arrière dans la partie ouverte (1216) conformément à la pression du liquide dans l'espace.

5. Tube (100) d'irrigation goutte-à-goutte selon la revendication 4, dans lequel :
le canal comprend une partie d'admission (124) qui reçoit le liquide s'écoulant de l'espace, le canal de réduction de pression (125) étant relié à la partie d'admission (124), et une partie d'éjection (126) qui est reliée au canal de réduction de pression (125) et reçoit le liquide dépressurisé ; et
la partie ouverte (1216) est incluse dans le canal de réduction de pression (125).

6. Tube (100) d'irrigation goutte-à-goutte selon la revendication 4, dans lequel :
le canal comprend une partie d'admission (124) qui reçoit le liquide s'écoulant de l'espace, le canal de réduction de pression (125) étant relié à la partie d'admission (124), un canal de communication (226) qui est relié au canal de réduction de pression (125) et permet au liquide dépressurisé de passer à travers lui et une partie d'éjection (126) qui est reliée au canal de communication (226) et reçoit le liquide dépressurisé; et
la partie ouverte (1216) est incluse dans le canal de communication (226).

7. Tube (100) d'irrigation goutte-à-goutte selon la revendication 5 ou 6, dans lequel :
le corps de goutteur (121) comprend en outre un orifice d'admission (123) qui permet à l'espace et à la partie d'admission (124) de communiquer l'un avec l'autre ; et
l'orifice d'admission (123) a une fonction d'arrêt à basse pression pour permettre l'admission d'un liquide ayant une pression égale ou supérieure à une valeur de consigne dans l'espace.
